# EUROPÄISCHE PATENTSCHRIFT

(11) **EP 2 343 469 B1**
(45) Veröffentlichungstag und Bekanntmachung des Hinweises auf die Patenterteilung: **30.03.2016**
(21) Anmeldenummer: 10197333.7
(22) Anmeldetag: 30.12.2010
(51) Int. Cl.: F16K 31/06

(54) **Ventil und wasserführendes Haushaltsgerät mit zumindest einem Ventil**
Valve and water supplied domestic appliance with at least one valve
Soupape et appareil ménager transportant de l'eau doté d'au moins une soupape

(30) Priorität: 12.01.2010 DE 102010000807
(43) Veröffentlichungstag der Anmeldung: 13.07.2011
(73) Patentinhaber: BSH Hausgeräte GmbH, 81739 München (DE)
(72) Erfinder: Fetzer, Gerhard, 89423 Gundelfingen (DE); Hartmann, Michael, 89420 Höchstädt (DE); Oblinger, Anton, 86368 Gersthofen (DE)

(56) Entgegenhaltungen:
- DE-A1- 3 219 799
- US-A- 3 670 768
- US-A- 4 690 371
- US-A- 5 996 968

## Beschreibung

Die Erfindung betrifft ein Verfahren zur Herstellung eines Ventils mit zumindest einem Absperrkörper, der von einem beweglichen und einen metallischen Kern umfassenden Betätigungskörper bewegbar ist, wobei der metallische Kern bei der Ventilherstellung in einen kunststoffhaltigen Hülsenkörper eingebracht wird, nach dem Oberbegriff des Anspruchs 1 sowie ein Ventil nach dem Oberbegriff des Anspruchs 3 und ein wasserführendes Haushaltsgerät mit zumindest einem derartigen Ventil.

Bei elektromagnetisch schaltbaren Ventilen ist üblicherweise ein metallischer Kern, etwa einen eisenhaltigen Massivkörper, als Anker vorgesehen, der in dem elektromagnetischen Feld einer äußeren Spule durch Induktionskraft z. B. axial verlagert werden kann. Dieser Kern wird dabei in eine Kunststoffhülse eingepresst, um dadurch die Möglichkeit zu eröffnen, an diese Kunststoffhülse einen Absperrkörper aus einem elastischen Material anzusetzen. Beim Einpressen des metallischen Kerns in die Kunststoffhülse kann es jedoch zu einem Aufplatzen der Kunststoffhülse kommen, insbesondere dann, wenn der Kern nicht mit minimalen Toleranzen exakt maßhaltig gefertigt ist. Andererseits muss der Kern frei von der Möglichkeit einer Relativbewegung in der Kunststoffhülse sitzen, da ansonsten bei zu großem Radial- und/oder Axialspiel durch ein Schwingen des metallischen Kerns im Feld des Spulenkörpers eine zusätzliche Geräuschentwicklung von etwa 4-6 dB(A) entstehen würde, weil dann der schwingende Kern gegen die ihn umgebende Kunststoffhülse schlagen würde. Ein loses Einlegen des Kerns wäre daher nachteilig. Zudem ist es für das anschließende Aufsetzen des Absperrkörpers, zum Beispiel eines eingreifenden Dichtpilzes, auf die Kunststoffhülse erforderlich, zumindest eine Entlüftungsmöglichkeit zu belassen, um beim Aufsetzen des Absperrkörpers die Luft entweichen lassen zu können und somit die Montage des Absperrkörpers erst zu ermöglichen. Der Raum für den Kern kann somit nicht hermetisch dicht sein. Dadurch muss aber eine spezielle Oberflächenbehandlung für den Kern vorgesehen sein, da ansonsten beispielsweise bei Einsatz in einer Spül- oder Waschmaschine der Kern durch den nicht zu vermeidenden Kontakt mit Spülmedien und/oder Salzen korrodieren könnte.

US 5 996 968 offenbart ein Ventil, wobei der Hülsenkörper direkt gegen den metallischen Kern gespritzt wird.

Der Erfindung liegt das Problem zugrunde, bei derartigen Ventilen eine Verbesserung zu erreichen.

Gemäß der Erfindung wird diese Aufgabe bei einem Verfahren der eingangs genannten Art dadurch gelöst, dass der Absperrkörper zumindest bereichsweise direkt gegen den metallischen Kern gespritzt wird und diesen dadurch in seiner Lage im Hülsenkörper unverrückbar sichert. Der metallische Kern ist in einen gebildeten Hülsenkörper eingelegt und der Absperrkörper nachfolgend im Spritzgussverfahren derart in eine axiale Öffnung des Hülsenkörpers eingespritzt werden, dass er den in dem Hülsenkörper befindlichen Kern in seiner Lage zum Hülsenkörper sichert. Dann reicht ein Montageschritt, um den Kern in seiner Lage zu sichern und gleichzeitig den Absperrkörper dichtend anzuformen. Dabei kann der Hülsenkörper zumindest eine Entlüftungsöffnung umfassen, die beim Einspritzen des Absperrkörpers durch einlaufendes Material geschlossen wird.

Durch die Erfindung ist es nicht mehr erforderlich, dass der Kern in einen Hülsenkörper eingepresst werden muss, so dass die Gefahr einer Beschädigung des Hülsenkörpers vermieden ist. Dennoch ist dadurch, dass bei der Montage Kunststoff des Absperrkörpers direkt gegen den Kern gespritzt wird, dieser im fertigen Ventil unverrückbar gegenüber dem Hülsenkörper gehalten, so dass eine Relativbewegung mit den daraus resultierenden Geräuschen nicht stattfinden kann.

Daher kann der metallische Kern beim fertigen Ventil luftdicht im Hülsenkörper aufgenommen sein, so dass eine Korrosionsgefahr vermieden ist. Irgendeine Oberflächenbeschichtung oder Verzinkung des metallischen Kerns ist daher entbehrlich, so dass sich erhebliche Einsparungen ergeben. Auch müssen an den Kern mit der Erfindung nur noch deutlich verminderte Anforderungen an die Fertigungstoleranz und Maßhaltigkeit gestellt werden, da dieser nun nicht mehr eingepresst wird, d. h. ein Presssitz ist nicht mehr erforderlich, sondern in beiden Fällen kann durch das Anspritzen mit Kunststoffmaterial eine feste und daher geräuschfreie Lage auch bei leicht variierenden Maßen des Kerns erreicht werden.

Es ist besonders vorteilhaft möglich, dass der metallische Kern bereichsweise von dem Hülsenkörper und bereichsweise von dem Absperrkörper jeweils abstandfrei dicht umschlossen ist. Durch das Anspritzen von Kunststoff kann damit eine Relativbeweglichkeit des Kerns in dem Hülsenkörper vermieden werden, so dass im Betrieb keine Zusatzgeräusche auftreten. Die Einpassung des Kerns kann besonders günstig zudem auch luftdicht sein, so dass auch eine Korrosionsgefahr ausgeschlossen werden kann.

Wenn der Absperrkörper einen Dichtpilz ausbildet, insbesondere aus einem elastisch verformbaren, flexiblen Material, insbesondere einem Silikonmaterial, kann auch der Absperrkörper erhebliche Toleranzen abfangen und in seinem Ventilsitz in unterschiedlich weiter Eindrücklage anliegen. Dabei ist dennoch in jedem Fall ein dichtes Anliegen des Absperrkörpers in seinem zugehörigen Ventilsitz gewährleistet.

Sofern der Absperrkörper bereichsweise in einen axialen, offenen Endbereich des Hülsenkörpers eingespritzt und bereichsweise an zumindest einem radial ausgreifenden Kragen des Hülsenkörpers gesichert ist, ist eine zusätzliche Abstützung für den Absperrkörper erreicht. Dieser muss mit dem Material des Hülsenkörpers keine chemische Verbindung eingehen und kann dennoch flüssigkeits- und luftdicht an diesem anliegen.

Ein wasserführendes Haushaltsgerät wie z. B. eine Geschirrspülmaschine mit zumindest einem Ventil kann besonders leise und bezüglich des Ventils verschleißarm laufen und ist als Bestandteil der Erfindung hier gesondert beansprucht.

Die Erfindung betrifft insbesondere auch ein Ventil mit zumindest einem Absperrkörper, der von einem beweglichen und einen metallischen Kern umfassenden Betätigungskörper bewegbar ist, wobei der metallische Kern in einem kunststoffhaltigen Hülsenkörper aufgenommen ist, welches dadurch gekennzeichnet ist, dass der metallische Kern bereichsweise von dem Hülsenkörper und bereichsweise von dem Absperrkörper umschlossen ist.

Die Erfindung betrifft auch ein wasserführendes Haushaltsgerät, insbesondere eine Geschirrspülmaschine mit zumindest einem erfindungsgemäß ausgebildetem Ventil.

Sonstige vorteilhafte Aus- und Weiterbildungen der Erfindung sind in den Unteransprüchen wiedergegeben.

Die Erfindung und ihre Weiterbildungen sowie deren Vorteile werden nachfolgend anhand von Zeichnungen näher erläutert.

Es zeigen jeweils schematisch :
- Fig. 1: ein nicht erfindungsgemäßes Ventil in einem ersten Ausführungsbeispiel in explosionsartig herausgezeichneter Darstellung der Einzelteile,
- Fig. 2: einen Ventilstößel des Ventils des Ausführungsbeispiels nach Figur 1 in aufgeschnittener perspektivischer Ansicht,
- Fig. 3: einen Ventilstößel des Ventils des Ausführungsbeispiels nach Figur 1 in aufgeschnittener Seitenansicht,
- Fig. 4: eine ähnliche Darstellung wie Figur 1, jedoch eines zweiten vorteilhaften Ausführungsbeispiels gemäß der Erfindung,
- Fig. 5: eine ähnliche Darstellung wie Figur 2, jedoch des zweiten Ausführungsbeispiels des Stößels und noch vor Anmontage des Absperrkörpers,
- Fig. 6: eine ähnliche Darstellung wie Figur 5, jedoch mit angespritztem Absperrkörper,
- Fig. 7: eine ähnliche Darstellung wie Figur 3, jedoch des zweiten Ausführungsbeispiels und mit zusätzlich in den Raum radial außerhalb des metallischen Kerns eingespritztem Kunststoffmaterial des Absperrkörpers.

Elemente mit der gleichen Funktion und Wirkungsweise sind in den Figuren jeweils mit denselben Bezugszeichen versehen.

Ein Ventil 1 umfasst einen beweglichen Absperrkörper 2, der an einen einen sich axial erstreckenden, metallischen Kern 3 umfassenden Betätigungskörper 4 angesetzt und von diesem bewegbar ist. Die Teile 2, 3 und 4 bilden gemeinsam einen Ventilstößel 13 aus, der in einem offenen oder geschlossenen äußeren Ventilgehäuse 5 angeordnet und durch die aus diesem Ventilgehäuse 5, das zum Beispiel eine Spulenanordnung umfassen kann, ausgeübte induktive Kraft gegen die Kraft einer Rückstellfeder 11 beweglich ist. Der metallische Kern 3 wirkt daher im elektromagnetischen Ventil 1 wie ein Anker. Ein solches Ventil 1 wird häufig auch als Magnetventil bezeichnet. Hier im Ausführungsbeispiel ist der Kern 3 massivmetallisch ausgebildet. Auch ein nur metallhaltiges Material kann in Betracht kommen.

Um eine gute Verbindungsmöglichkeit zwischen dem metallischen Kern 3 und dem Absperrkörper 2 und einen geräuscharmen Betrieb des Ventils 1 zu ermöglichen, ist der Kern 3 in einem kunststoffhaltigen Hülsenkörper 6 eingebracht, der auch eine Abstützung für den Absperrkörper 2 bietet.

Bei der Ventilherstellung wird der zu bildende Absperrkörper 2 und/oder der zu bildende Hülsenkörper 6 zumindest bereichsweise direkt gegen den metallischen Kern 3 gespritzt, so dass dieser in seiner Lage innerhalb des Hülsenkörpers 6 unverrückbar wird und bleibt.

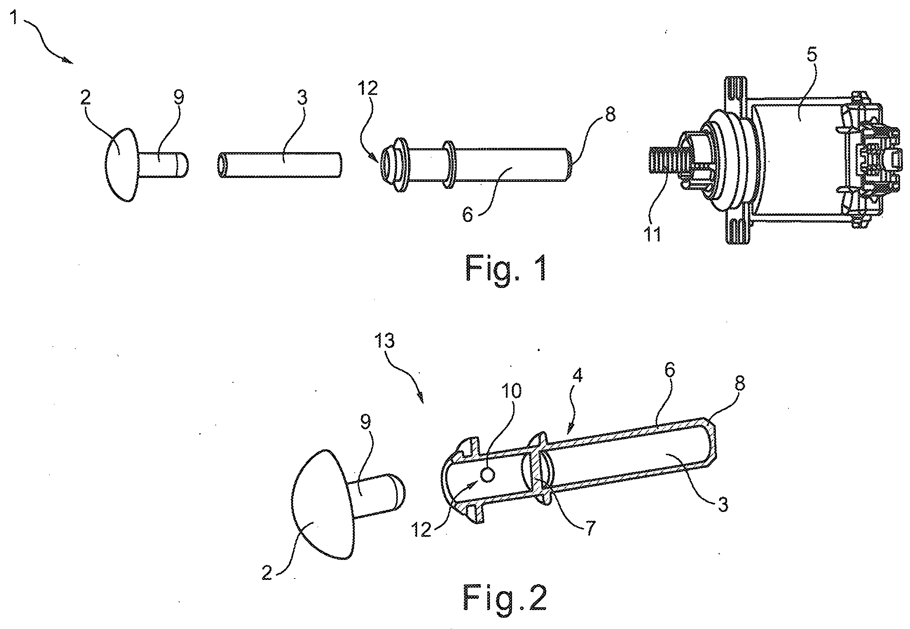

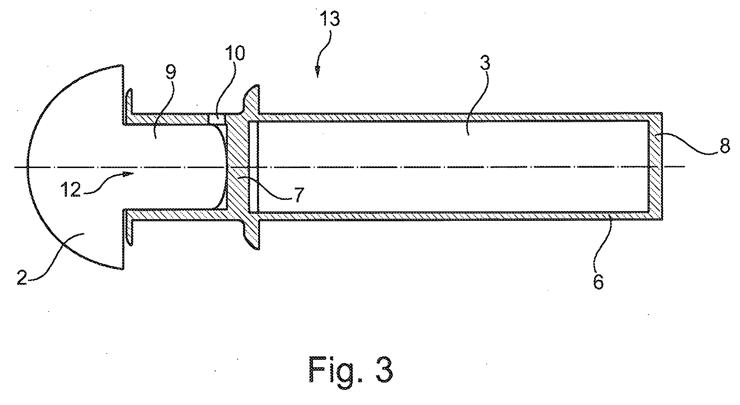

In einem ersten nicht erfindungsgemäßen Ausführungsbeispiel gemäß den Figuren 1 bis 3 ist bei dem dort gezeichneten Ventil 1 der metallische Kern 3 in eine Spritzgussvorrichtung eingesetzt worden und dort von Kunststoff allseits umspritzt worden, so dass der Kern 3 bei der Herstellung gleichsam als verlorener Formkern gedient hat und der umgebende Kunststoff dadurch den in den genannten Figuren gezeichneten, den metallischen Kern 3 umfassenden Hülsenkörper 6 bildet, der den Kern 3 nicht nur radial umfasst, sondern an dessen axialen Enden ebenfalls über einen Zwischenstegbereich 7 und einen axialen Abschluss 8 fest verschlossen ist. Der Kern 3 ist somit allseits, d. h. rundum dicht vom Hülsenkörper 6 umschlossen.

Der Hülsenkörper 6 ist zudem in axialer Verlängerung des Kerns 3 mit einem gegenüber diesem durch den Zwischenstegbereich 7 zwar geschlossenen, jedoch nach außen hin axial offenen Ende 12 versehen, mit dem der Absperrkörper 2 nachfolgend zumindest mechanisch verbunden wird. Hier kann der Absperrkörper 2 zunächst geformt werden, beispielsweise als Dichtpilz aus einem elastisch verformbaren, flexiblen Material, insbesondere einem Silikonmaterial oder einem ähnlichen Weichteilmaterial, wie TPE, zum Beispiel mit einer Härte von ca. 30 Shore, und dann als feste Einheit mit dem Pilzfuß 9 in das offene Ende 12, das als Einsteckhülse dient, eingedrückt werden. Um die Luft aus diesem Ende dabei entweichen zu lassen, kann eine oder mehrere Entlüftungsöffnung(en) 10 vorgesehen sein. Diese Entlüftungsöffnung 10 liegt hier außerhalb des den Kern 3 aufnehmenden Bereichs, so dass dieser luft- und flüssigkeitsdicht eingeschlossen sein kann. Dieser Einschluss ist zudem durch das direkte Anspritzen von Kunststoff gegen den Kern 3 abstandfrei, so dass dieser spielfrei gehalten ist und ein Bewegungsspielraum für den Kern 3 gegenüber dem umgebenden Hülsenkörper 6 nicht verbleibt. Damit ist auch eine Geräuschentwicklung durch axiales und/oder radiales Hin- und Herschwingen des Metallkerns, d. h. durch Klopfen des Kerns 3 gegen den Hülsenkörper 6 ausgeschlossen.

Dadurch, dass der Hülsenkörper 6 den metallischen Kern 3 flüssigkeits- und luftdicht, d h. hermetisch als rundum aufgebrachte, insbesondere aufgespritzte Hüllschicht umgibt, wird für diesen auch kein Korrosionsschutz benötigt. Denn es können keine Spülsubstanzen und/oder Salze oder sonstige aggressive Substanzen mit dem metallischen Kern 3 in Kontaktkommen. Eine korrosionsfeste Oberfläche oder sonstige Antikorrosionsmaßnahmen für den Kern sind nicht erforderlich. Der Kern 3 kann als ein rundzylindrischer, insbesondere etwa kreiszylinderförmiger Massivkörper ausgebildet und direkt von einer Stangenware - zum Beispiel aus einfachem Baustahl - abgelängt sein, ohne dass eine Nachbehandlung - außer vielleicht einem Entgraten oder einem Anfasen des axialen Endes - erforderlich wäre. Da ein Einpressen des Kerns auf Endanschlag in einen vorgefertigen Kunststoffkörper nicht erforderlich ist, sind zudem die Anforderungen an die Maßtoleranzen sehr gering. Spannungen im Kunststoff des Hülsenkörpers oder gar ein Aufsprengen des Hülsenkörpers können vermieden werden.

Der hier nur beispielhaft als Dichtpilz ausgebildete Absperrkörper 2 - auch ein Spitzkegel oder eine andere Form ist möglich - ist zudem vollständig von der Aufgabe entlastet, den Kern 3 auf seiner Position zu halten. Dieser ist vielmehr auf der dem Absperrkörper 2 zugewandten Seite durch den Zwischenstegbereich 7 abschließend gegen Bewegung gesichert. Damit ist die Toleranzabstimmung vereinfacht, der Pilzfuß 9 kann kürzer und mit weniger Material ausgebildet werden, und der Dichtpilz kann sich besser an die Dichtgeometrie anpassen.

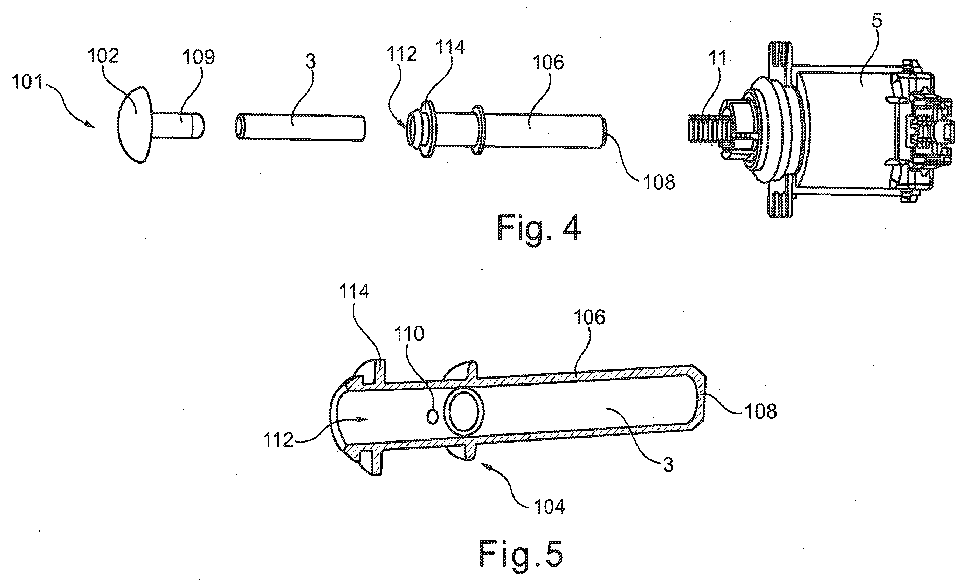

In einem zweiten vorteilhaften Ausführungsbeispiel eines Stößels 113 nach den Figuren 4 bis 7 kann der Kern 3 völlig gleichartig zum ersten Ausführungsbeispiel ausgebildet und im Ventil 101 induktiv entgegen der Feder 11 bewegbar sein, jedoch wird er diesmal bei der Ventilherstellung nicht vollständig von Kunststoff umspritzt, sondern in einen vorgefertigten Hülsenkörper 106 eingelegt und bis zu einem axialen Endabschluss 108 durchgeschoben. Axial gegenüberliegend am axial offenen Ende des vorgefertigten Hülsenkörpers 106 wird dann der Absperrkörper 102 angespritzt, so dass dieser dann zusammen mit dem Hülsenkörper 106 den Kern unverrückbar in seiner Lage sichert.

Hier wird also nicht der Hülsenkörper 106 durch Spritzen gegen den metallischen Kern 3 gebildet, sondern hier wird lediglich der Absperrkörper 2 mit seinem Pilzfuß 109 direkt durch das axial offene Ende 112 gegen den Kern 3 gespritzt.

Um dieses Anspritzen zu ermöglichen, ohne einen Überdruck in dem Hülsenkörper 106 aufzubauen, ist auch hier zumindest eine Entlüftungsöffnung 110 im Hülsenkörper 106 vorgesehen. Diese ist jetzt allerdings nicht über einen Zwischenstegbereich 7 gegenüber dem Kern 3 gedichtet. Ein solcher Zwischenstegbereich 7 ist hier nicht vorhanden. Um diese Entlüftungsöffnung(en) abzudichten und damit eine luft- und flüssigkeitsdichte Lage des Kerns 3 mit den oben genannten Vorteilen erreichen zu können, wird beim Einspritzen des Absperrkörpers 102 die zumindest eine Entlüftungsöffnung 110 durch einlaufendes Kunststoffmaterial geschlossen. Dadurch ist gleichzeitig auch eine optische Kontrolle des Ablaufs des Spritzgießens ermöglicht.

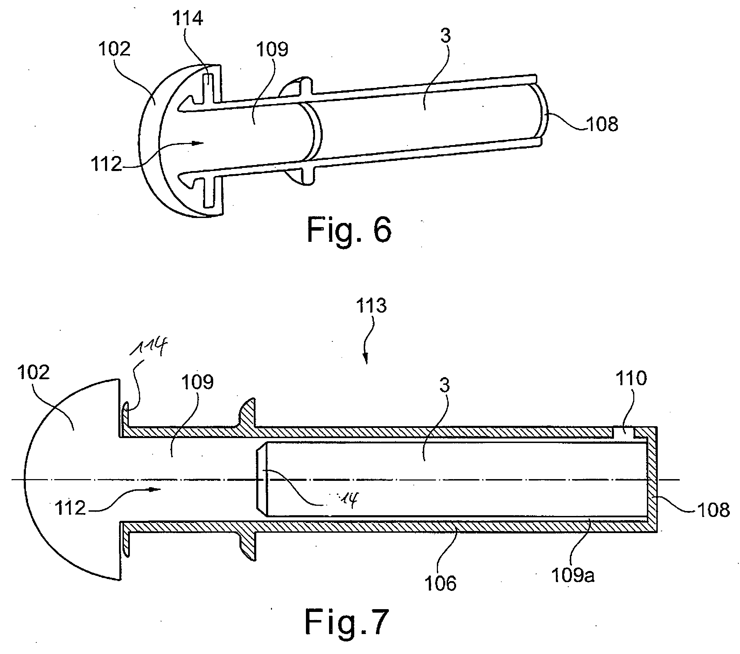

Im fertigen Ventil 101 ist somit der metallische Kern 3 bereichsweise - nämlich zumindest an einem axialen Ende und gemäß Fig. 6 auch radial außen - von dem Hülsenkörper 106 und bereichsweise - nämlich an dem anderen axialen Ende und gemäß Figur 7 auch radial außen von dem Absperrkörper 102 umschlossen. In der dort gezeigten Version endet der Pilzfuß 109 nicht an der dem offenen Ende 112 zugewandten axialen Stirnseite 14 des Kerns 3, sondern umläuft diesen im Bereich 109a auch noch radial bis zu seinem gegenüberliegenden Ende nahe dem axialen Abschluss 108. Daher ist auch die zumindest eine Entlüftung 110, aus der das eingespritzte Material des Absperrkörpers 102 dann am Ende des Spritzvorgangs auslaufen und diese Öffnung 110 damit dichtend verschließen kann, nahe am axialen Abschluss 108. Der Kern 3 ist in jedem Fall dicht von Kunststoffmaterial umgriffen, d. h. das Kunststoffmaterial füllt einen Radialspalt zwischen dem Kern 3 und der Innenmantelfläche des Hülsenkörpers 106 entlang dessen longitudinalen Erstreckung sowie den Raum vor dem der Einsetzöffnung 112 zugewandten axialen Ende 14 des Kerns 3 im Inneren des Hülsenkörpers 106 aus. Dabei sitzt das Kunststoffmaterial axial vorderseitig sowie entlang der Longitudinalerstreckung des Kerns 3 auf dessen Außenoberfläche auf. Das der Einsetzöffnung 112 abgerundete Ende des Kerns 3 liegt vorzugsweise planflächig an der Innenwand des axialen Abschlusses 108 des Hülsenkörpers 106, d.h. mit Endanschlag an. Auf diese Weise wird eine Rundumkapselung des Kerns in Kunststoff gebildet.

Insbesondere kann ein etwaiger Axialspalt zwischen dem der Einsetzöffnung 112 abgewandten Ende des Kerns 3 und der Innenwand des axialen Abschlusses 108 ebenfalls mit Kunststoff ausgefüllt sein. Bei dieser vorteilhaften Ausführungsvariante ist der Kern somit sowohl an seinen beiden Stirnseiten als auch ringsum seiner sich axial erstreckenden Außenmantelfläche von einer abdichtenden, ringsum geschlossenen Kunststoffhülle als aufsitzende Hüllschicht umgeben, d.h. der Kern ist vollständig in eine Kunststoffhülle eingekleidet.

Auch hier ist also der metallische Kern 3 allseits abstandfrei umschlossen, was die o. g. Vorteile hinsichtlich der Spiel- und Geräuschfreiheit mit sich bringt.

Wie in Figur 5 sichtbar ist, weist der Hülsenkörper 106 mit dem darin eingesetzten Kern 3 zunächst axial einseitig das offene Ende 112 auf, das erst durch Einspritzen des Absperrkörpers 102 geschlossen wird (Figur 6). Durch das Einlassen des Fusses 109 des Absperrkörpers 102 in das offene Ende 112 ist dann erst durch diesen und durch Bereiche des Hülsenkörpers 106 der metallische Kern wiederum luft- und flüssigkeitsdicht eingeschlossen, so dass auch hier die o. g. Vorteile hinsichtlich Rationalitätssteigerung durch vermindertes Erfordernis eines Korrosionsschutzes gelten.

Wie oben kann der Absperrkörper 102 verschiedene Formen haben und beispielsweise wie in der Zeichnung einen Dichtpilz ausbilden. Auch die Materialien und Verformbarkeit sind wie oben zu sehen. Der Absperrkörper 102 muss beim Anspritzen keine chemische Verbindung zu dem Hülsenkörper 106 ausbilden, sondern kann sich nach seinem Einspritzen sowohl in dem axial offenen Endbereich 112 des Hülsenkörpers 106 als auch an zumindest einem radial ausgreifenden Kragen 114 des Hülsenkörpers 106 abstützen.

Insbesondere sind solche Ventile 1, 101 wegen der guten Abschottung bzw. Abkapselung der Kerne 3 auch innerhalb von wasserführenden Haushaltsgeräten einsetzbar. Diese sind daher gesondert beansprucht und können als allein stehende Geräte, insbesondere Tischgeräte, oder als eingebaute oder einbaufähige Geräte, etwa innerhalb einer Küchenzeile, ausgebildet sein. Ein derartiges Haushaltsgerät kann beispielhaft eine Geschirrspülmaschine, eine Waschmaschine oder einen Trockner bilden und zum Beispiel innerhalb eines Wärmetauschers und/oder in der Wasserzu- oder -abführung ein oder mehrere Ventil(e) 1, 101 umfassen.

Insbesondere können sich folgende Vorteile ergeben:
▪ Der Raum für den Metallkörper im Hülsenkörper kann sehr gut hermetisch abgeschlossen werden, so dass der Metallkörper bzw. Metallkern nicht korrodieren kann. Ein Aufsprengen der Kunststoffhülse wird vermieden.
▪ Es können keine Spülsubstanzen, Salze, und/oder sonstige Spülmedien mit dem Metallteil in Berührung kommen. Es ist keine besondere Oberfläche des Kerns nötig.
▪ Der Metallkörper bzw. metallische Kern ist spielfrei im Hülsenkörper eingeschlossen. Es entstehen keine Geräusche durch Hin- und Herschwingen des Metallkörpers im magnetischen Feld.
▪ Der Dichtpilz des Absperrkörpers kann besser durch innenseitig liegende Stützgeometrien gestützt werden.
▪ Durch das Anspritzen können wesentlich verzahntere bzw. höhere Geometrien geschaffen werden, die den Dichtpilz auf dem Stößel halten.
▪ Toleranzen des Kerns können wesentlich größer gestaltet werden, da das Dichtpilzmaterial das Metallteil einbettet.
▪ Die Dichtgeometrie des Hülsenkörpers und des metallischen Kerns ist nicht von Toleranzeinflüssen des Kerns oder der Hülse bzw. des Hülsenkörpers abhängig.
▪ Auch wenn sich die Stoffe von Hülsenkörper und Dichtpilz nicht chemisch verbinden, wird durch das geometrische Ineinandergreifen der Konturen eine Abdichtung gewährleistet.
▪ Gegenüber einer Steckmontage kann (je nach Materialpaarung) durch das geometrische Ineinandergreifen der beiden Geometrien von Hülsenkörper und Kern eine Demontage der beiden Teile wesentlich erschwert bzw. verhindert werden. Je nach Materialpaarung.
▪ Es können chemisch unterschiedliche Stoffe gepaart werden, da der Verbindungssitz mechanisch erfolgt.
▪ Über die mit der Dichtungsmasse gefüllten Entlüftungsbohrungen kann erkannt werden, ob der Spritzprozess ordentlich bzw. einwandfrei verlaufen ist oder nicht.
▪ Es sind keine Zwangsentformungen des Dichtpilzes des Absperrkörpers aus dem Spritzwerkzeug nötig, so dass die Taktzeit für die Herstellung des Ventilstößels insgesamt kürzer als bei einer Steckmontage wird.

### Bezugszeichenliste

- 1, 101: Ventil,
- 2, 102: Absperrkörper,
- 3: metallischer Kern,
- 4, 104: Betätigungskörper,
- 5: Ventilgehäuse,
- 6, 106: Hülsenkörper,
- 7: Zwischenstegbereich,
- 8, 108: axialer Abschluss,
- 9, 109: Pilzfuß,
- 10, 110: Entlüftungsöffnung,
- 11: Rückstellfeder,
- 12, 112: axial offenes Ende,
- 13, 113: Stößel,
- 114: radial ausgreifender Kragen,
- 14: vorderes, axiales Ende des metallischen Kerns

## Patentansprüche

1. Verfahren zur Herstellung eines Ventils (101) mit zumindest einem Absperrkörper (102), der von einem beweglichen und einen metallischen Kern (3) umfassenden Betätigungskörper (104) bewegbar ist, wobei der metallische Kern (3) in einen kunststoffhaltigen Hülsenkörper (106) eingebracht wird,
wobei der Absperrkörper (102) zumindest bereichsweise direkt gegen den metallischen Kern (3) gespritzt wird und diesen dadurch in seiner Lage im Hülsenkörper (106) unverrückbar sichernt, **dadurch gekennzeichnet, dass** der metallische Kern (3) in einen gebildeten Hülsenkörper (106) eingelegt wird und der Absperrkörper (102) nachfolgend im Spritzgussverfahren derart in ein axial offenes Ende (112) des Hülsenkörpers (106) eingespritzt wird, dass er den in dem Hülsenkörper (106) befindlichen Kern (3) in seiner Lage zum Hülsenkörper (106) sichert.

2. Verfahren nach Anspruch 1, **dadurch gekennzeichnet, dass** der Hülsenkörper (106) zumindest eine Entlüftungsöffnung (110) umfasst, und diese beim Einspritzen des Absperrkörpers (102) durch einlaufendes Material geschlossen wird.

3. Ventil (101) mit zumindest einem Absperrkörper (102), der von einem beweglichen und einen metallischen Kern (3) umfassenden Betätigungskörper (104) bewegbar ist, wobei der metallische Kern (3) in einem kunststoffhaltigen Hülsenkörper (106) aufgenommen ist, insbesondere nach mindestens einem der vorhergehenden Ansprüche, wobei der metallische Kern (3) bereichsweise von dem Hülsenkörper (106) und bereichsweise von dem Absperrkörper (102) umschlossen ist, **dadurch gekennzeichnet, dass** der Hülsenkörper (106) zumindest axial einseitig ein offenes Ende (112) aufweist und in dieses offene Ende derart ein Absperrkörper (102) des Ventils (101) eingespritzt ist, dass durch diesen und durch Bereiche des Hülsenkörpers (106) der metallische Kern (3) dicht eingeschlossen ist.

4. Ventil (101) nach Anspruch 3, **dadurch gekennzeichnet, dass** der metallische Kern (3) bereichsweise von dem Hülsenkörper (106) und bereichsweise von dem Absperrkörper (102) abstandfrei umschlossen ist.

5. Ventil (101) nach einem der Ansprüche 3 oder 4, **dadurch gekennzeichnet, dass** der metallische Kern (3) als ein rundzylindrischer Massivkörper ausgebildet und gegen axiale Relativbewegung zum Hülsenkörper (106) gesichert in diesem in Kombination mit dem Absperrkörper (102), gehalten ist.

6. Ventil (101) nach einem der Ansprüche 3 bis 5, **dadurch gekennzeichnet, dass** der Absperrkörper (102) einen Dichtpilz ausbildet.

7. Ventil (101) nach einem der Ansprüche 3 bis 6, **dadurch gekennzeichnet, dass** der Absperrkörper (102) aus einem elastisch verformbaren, flexiblen Material, insbesondere einem Silikonmaterial, gebildet ist.

8. Ventil (101) nach einem der Ansprüche 6 oder 7, **dadurch gekennzeichnet, dass** der Absperrkörper (102) bereichsweise in einen axialen, offenen Endbereich (112) des Hülsenkörpers (106) eingespritzt und bereichsweise an zumindest einem radial ausgreifenden Kragen (114) des Hülsenkörpers (106) gesichert ist.

9. Ventil (101) nach einem der Ansprüche 3 bis 8, **dadurch gekennzeichnet, dass** dieses ein elektromagnetisch schaltbares Ventil ist und der metallische Kern (3) axial in einem äußeren elektromagnetischen Feld bewegbar ist.

10. Wasserführendes Haushaltsgerät, insbesondere Geschirrspülmaschine mit zumindest einem Ventil (101) nach einem der Ansprüche 3 bis 9.

## Claims

1. Method for producing a valve (101) having at least one shut-off body (102) which can be moved by a movable actuating body (104) comprising a metallic core (3), the metallic core (3) being introduced into a plastic-containing sleeve body (106),
wherein the shut-off body (102) is extruded at least in sections directly against the metallic core (3) and thereby immovably secures the latter in its position in the sleeve body (106), **characterised in that** the metallic core (3) is inserted into a formed sleeve body (106) and the shut-off body (102) is subsequently injection-moulded into an axially open end (112) of the sleeve body (106) by means of the injection moulding method in such a way that it secures the core (3) contained in the sleeve body (106) in its position relative to the sleeve body (106).

2. Method according to claim 1, **characterised in that** the sleeve body (106) includes at least one ventilation opening (110) and the latter is closed by means of inflowing material when the shut-off body (102) is injection-moulded.

3. Valve (101) having at least one shut-off body (102) which can be moved by a movable actuating body (104) comprising a metallic core (3), the metallic core (3) being accommodated in a plastic-containing sleeve body (106), in particular according to at least one of the preceding claims, wherein the metallic core (3) is enclosed in sections by the sleeve body (106) and in sections by the shut-off body (102), **characterised in that** the sleeve body (106) has an open end (112) at least axially on one side and into said open end a shut-off body (102) of the valve (101) is countersunk in such a way that the metallic core (3) is hermetically enclosed by means of said shut-off body and by sections of the sleeve body (106).

4. Valve (101) according to claim 3, **characterised in that** the metallic core (3) is enclosed free of clearance in sections by the sleeve body (106) and in sections by the shut-off body (102).

5. Valve (101) according to one of claims 3 or 4, **characterised in that the** metallic core (3) is embodied as a round-cylindrical solid body and is held secured in the latter against axial relative movement with respect to the sleeve body (106), where necessary in combination with the shut-off body (102).

6. Valve (101) according to one of claims 3 to 5, **characterised in that** the shut-off body (102) embodies a sealing mushroom.

7. Valve (101) according to one of claims 3 to 6, **characterised in that** the shut-off body (102) is formed from an elastically deformable, flexible material, in particular a silicone material.

8. Valve (101) according to one of claims 6 or 7, **characterised in that** the shut-off body (102) is injection-moulded in sections into an axial open end section (112) of the sleeve body (106) and is secured in sections to at least one radially extending collar (114) of the sleeve body (106).

9. Valve (101) according to one of claims 3 to 8, **characterised in that** it is an electromagnetically switchable valve and the metallic core (3) is axially movable in an external electromagnetic field.

10. Water-conducting domestic appliance, in particular a dishwasher, having at least one valve (101) according to one of claims 3 to 9.

## Revendications

1. Procédé de fabrication d'une vanne (101) comprenant au moins un corps de blocage (102) qui est déplaçable par un corps d'actionnement mobile (104) comprenant un noyau métallique (3), le noyau métallique (3) étant placé dans un corps de douille (106) contenant de la matière plastique,
le corps de blocage (102) étant injecté au moins en partie directement contre le noyau métallique (3) et bloquant celui-ci ainsi de manière indéplaçable dans sa position dans le corps de douille (106), **caractérisé en ce que** le noyau métallique (3) est posé dans un corps de douille formé (106) et **en ce que** le corps de blocage (102) est ensuite injecté par procédé de moulage par injection de telle manière dans une extrémité axiale ouverte (112) du corps de douille (106) qu'il bloque le noyau (3) se trouvant dans le corps de douille (106) dans sa position par rapport au corps de douille (106).

2. Procédé selon la revendication 1, **caractérisé en ce que** le corps de douille (106) comprend au moins une ouverture d'aération (110) et **en ce que** celle-ci est fermée par de la matière entrant lors de l'injection du corps de blocage (102).

3. Vanne (101) comprenant au moins un corps de blocage (102) qui est déplaçable par un corps d'actionnement mobile (104) comprenant un noyau métallique (3), le noyau métallique (3) étant logé dans un corps de douille (106) contenant de la matière plastique, notamment selon au moins une quelconque des revendications précédentes, le corps métallique (3) étant entouré en partie par le corps de douille (106) et en partie par le corps de blocage (102), **caractérisée en ce que** le corps de douille (106) présente une extrémité ouverte (112) au moins axialement sur un côté et **en ce qu'**un corps de blocage (102) de la vanne (101) est injecté dans cette extrémité ouverte de manière à ce qu'en raison de celui-ci et en raison de parties du corps de blocage (106), le corps métallique (3) soit inclus de manière étanche.

4. Vanne (101) selon la revendication 3, **caractérisée en ce que** le noyau métallique (3) est entouré en partie par le corps de douille (106) et en partie par le corps de blocage (102) en étant exempt d'écart.

5. Vanne (101) selon la revendication 3 ou 4, **caractérisée en ce que** le noyau métallique (3) est réalisé comme un corps massif cylindrique rond et **en ce qu'**il est maintenu contre un mouvement axial relatif par rapport au corps de douille (106) en étant bloqué dans celui-ci en combinaison avec le corps de blocage (102).

6. Vanne (101) selon l'une quelconque des revendications 3 à 5, **caractérisée en ce que** le corps de blocage (102) forme un champignon étanche.

7. Vanne (101) selon l'une quelconque des revendications 3 à 6, **caractérisée en ce que** le corps de blocage (102) est formé à partir d'une matière flexible, élastiquement déformable, notamment à partir d'une matière en silicone.

8. Vanne (101) selon l'une quelconque des revendications 6 ou 7, **caractérisée en ce que** le corps de blocage (102) est injecté en partie dans une zone terminale (112) axiale ouverte du corps de douille (106) et **en ce qu'**il est bloqué en partie sur au moins une collerette (114) du corps de douille (106), radialement en saillie.

9. Vanne (101) selon l'une quelconque des revendications 3 à 8, **caractérisée en ce que** celle-ci est une vanne électromagnétiquement commutable et **en ce que** le noyau métallique (3) est axialement déplaçable dans un champ électromagnétique extérieur.

10. Appareil ménager à circulation d'eau, notamment lave-vaisselle muni d'au moins une vanne (101) selon l'une quelconque des revendications 3 à 9.
